Europäisches Patentamt

European Patent Office

Office européen des brevets

(11) Numéro de publication: **0 251 948**
**A2**

## (12) DEMANDE DE BREVET EUROPEEN

(21) Numéro de dépôt: **87420177.5**

(22) Date de dépôt: **25.06.87**

(51) Int. Cl.⁴: **F 04 B 21/04**

(30) Priorité: **26.06.86 FR 8609484**

(43) Date de publication de la demande:
**07.01.88 Bulletin 88/01**

(84) Etats contractants désignés:
**AT BE CH DE ES FR GB GR IT LI LU NL SE**

(71) Demandeur: **"BERTHOUD S.A."**
**F-69220 Belleville sur Saône (FR)**

(72) Inventeur: **Nissels, Robert**
**Vallières**
**F-69830 Saint Georges de Reneins (FR)**

(74) Mandataire: **Karmin, Roger et al**
**Cabinet MONNIER 150, cours Lafayette**
**F-69003 Lyon (FR)**

(54) **Pompe à piston à membrane à déroulement.**

(57) La jupe de son piston (4) comprend en partant du dessus (9) de ce dernier une première partie (10) de diamètre nettement plus faible que celui de l'alésage de son cylindre (1) et une seconde partie de diamètre égal au jeu près à celui dudit alésage. Une gorge périphérique (12) est ménagée dans la seconde partie (11) près de sa jonction (25) avec la première (10) tandis qu'une rainure longitudinale (14) part de cette gorge pour aboutir à la base de ladite seconde partie. La largeur de la gorge (12) est supérieure au diamètre d'un joint torique usuel (13) engagé dans cette gorge. En phase d'aspiration, c'est-à-dire lorsque le piston (4) descend en direction de la flèche F2, il se crée une dépression dans l'espace (42) situé entre le piston et le cylindre de sorte qu'alors la membrane (5) est automatiquement appliquée contre l'alésage du cylindre (1) et le pourtour de la partie (11) du piston (4).

Fig. 1

EP 0 251 948 A2

**Description**

La présente invention est relative à des perfectionnements apportés aux pompes à piston dont l'élément d'étanchéité entre son piston et l'alésage de son cylindre est constitué par une membrane à déroulement.

On sait qu'un tel type de membrane présente l'avantage de permettre une grande course du piston et une étanchéité parfaite. Malheureusement, l'application d'une membrane à déroulement à une pompe aspirante et refoulante est pratiquement impossible, du fait de la dépression existant lors de l'aspiration. En effet, ce déplacement du piston entraîne une dépression à l'intérieur du cylindre, si bien que la membrane ne reste pas appliquée contre le pourtour du piston et se fripe à l'intérieur du cylindre, de telle sorte qu'elle se détruit rapidement.

Les perfectionnements qui font l'objet de la présente invention, visent à réaliser les conditions nécessaires à l'utilisation d'une membrane à déroulement comme élément d'étanchéité d'une pompe aspirante et refoulante.

A cet effet et conformément à l'invention, on met en oeuvre des moyens de créer une dépression à l'arrière de la membrane pendant la phase d'aspiration, afin que le déroulement de la membrane s'effectue sans qu'elle ne se sépare de la périphérie de la jupe du piston, lesdits moyens permettant en outre d'annuler cette dépression pendant la phase de refoulement de la pompe.

Suivant une disposition particulièrement avantageuse, la jupe du piston de la pompe suivant l'invention comprend en partant du dessus de ce piston, une première partie de diamètre nettement plus faible que celui de l'alésage du cylindre de la pompe, et une seconde partie de diamètre égal, au jeu de fonctionnement près, à celui dudit alésage, une gorge périphérique étant ménagée dans la seconde partie, près de sa jonction avec la première, tandis qu'une rainure part de cette gorge pour aboutir à la base de ladite seconde partie, la largeur de ladite gorge étant supérieure au diamètre d'un joint torique usuel engagé dans ladite gorge et destiné à réaliser l'étanchéité entre le piston et le cylindre lors de l'aspiration, afin de créer une dépression entre ce joint et la membrane et au contraire à annuler cette étanchéité lors de la phase de refoulement.

Le dessin annexé, donné à titre d'exemple, permettra de mieux comprendre l'invention, les caractéristiques qu'elle présente et les avantages qu'elle est susceptible de procurer :

Fig. 1 est une coupe longitudinale d'une pompe aspirante refoulante comportant application de l'invention, dont le piston est illustré à la fin de la phase d'aspiration.

Fig. 2 est une vue semblable à celle de fig. 1, mais montrant le piston au début de la phase de refoulement.

Fig. 3 à 5 illustrent la position du joint du piston dans ses différentes positions par rapport à sa gorge.

La pompe aspirante et refoulante établie conformément à l'invention et illustrée sur le dessin, comprend essentiellement un cylindre 1 réalisé en deux parties l'une inférieure 2, et l'autre supérieure 3, un piston 4 et une membrane à déroulement 5, dont le bas de la paroi latérale est pincé entre les deux parties 2 et 3 du cylindre 1, tandis que son fond est associé au dessus du piston 4.

Bien entendu, le piston est mû de manière alternative à l'intérieur de l'alésage du cylindre 1 au moyen d'une bielle 6 associée à un élément tel que le maneton 7 d'un vilebrequin, le trajet circulaire dudit maneton étant illustré par des traits discontinus. L'extrémité supérieure de la bielle est articulée au piston 4 au moyen d'un axe 8 passant dans une chape 9a issue de la face interne du dessus 9 de ce piston.

La jupe du piston 4 comprend une première partie 10 dont le diamètre est nettement inférieur à celui de l'alésage du cylindre et une seconde partie 11 disposée en dessous de la première et dont le diamètre est égal, au jeu de fonctionnement près, à celui dudit alésage.

Dans la partie inférieure 11 de la jupe du piston 4 et près de sa jonction avec la partie 10, on a ménagé une gorge périphérique 12 de largeur et de hauteur plus importantes que celles d'un joint torique usuel 13 disposé dans cette gorge. Ainsi, il existe un jeu latéral et un autre axial entre ce joint et les parois de cette dernière. A partir de la gorge 12 part une rainure longitudinale 14 mettant en communication le bas de la jupe du piston et ladite gorge.

On observe que le fond de la membrane 5 est associé au dessus 9 du piston 4 au moyen d'une coupelle 15 assujettie au dessus de ce piston par un système tige filetée-écrou 16-16a. Dans ces conditions, le fond de la membrane est pincé entre ladite coupelle et le dessus 9 du piston 4. La base de la coupelle déborde au-delà du diamètre du piston 4 de manière à orienter la jonction de la paroi latérale et du fond de la membrane légèrement en direction du bas dans l'espace compris entre la partie supérieure 10 du piston et l'alésage du cyclindre 1. La coupelle 15 comporte une cloison périphérique 15a qui s'élève au-dessus de la base de cette cuvette et dont la face périphérique est tronconique avec ouverture en direction du bas.

L'alésage de la partie inférieure 2 du cylindre 1 est cylindrique, tandis que celui de la partie supérieure 3 est légèrement tronconique avec ouverture en direction du bas, de la même manière que la face périphérique de la cloison 15a de la coupelle 15 et avec substantiellement la même conicité.

On observe que la partie supérieure 3 du cylindre 1 est fermée par un voile transversal 3a. Celui-ci comporte deux soupapes 17, 18 destinées à respectivement fermer des lumières 19, 20. La soupape 17 et les lumières 19 sont en relation avec le compartiment 21 dans lequel le liquide est aspiré, tandis que la soupape 18 et les lumières 20 correspondent à la chambre de refoulement 22.

On prévoit avantageusement de faire comporter à l'alésage de la partie inférieure 2 du cylindre deux nervures 2a qui s'engagent dans les rainures 14. Cette coopération permet d'une part d'orienter convenablement le piston par rapport au cylindre afin d'éviter le vrillage de la membrane et d'autre part de nettoyer les rainures afin qu'elles assurent toujours le passage de l'air.

Le fonctionnement est le suivant :

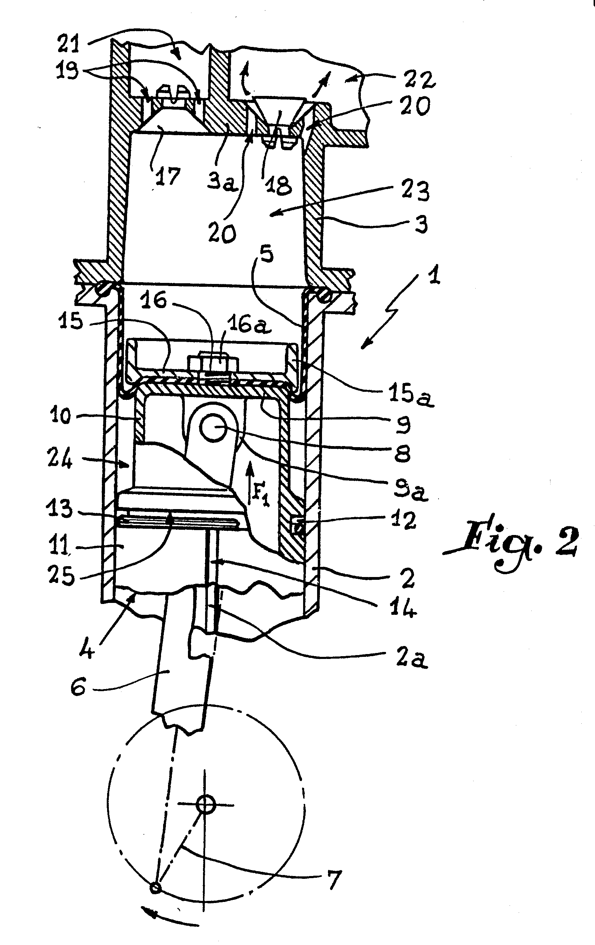

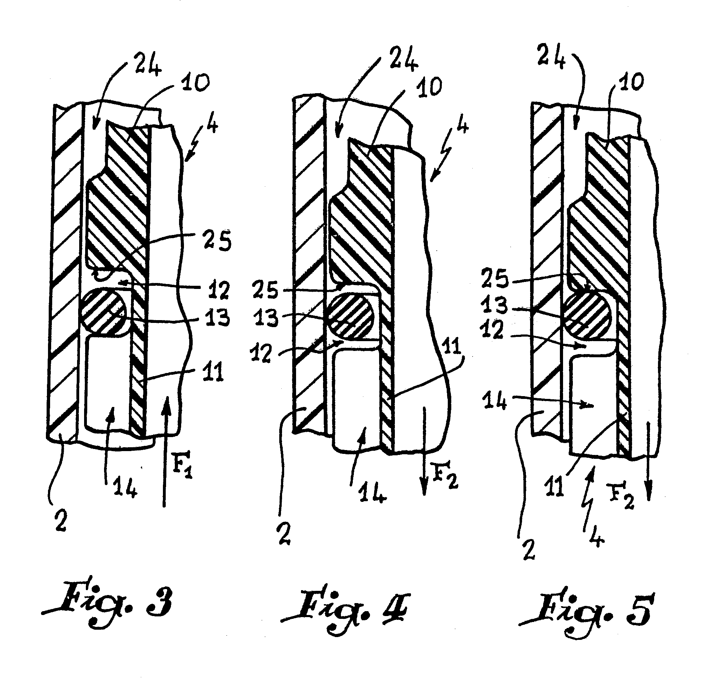

- en phase de refoulement (position de fig. 2) le piston 4 s'élève en direction des flèches F1. La pression régnant dans le volume 23 défini entre le piston et l'alésage du cylindre 1 tend à plaquer la paroi latérale de la membrane 5 respectivement contre ledit alésage et la face périphérique de la partie 10 du piston 4. Bien entendu, la soupape 17 est alors fermée, tandis que celle 18 est ouverte pour permettre le refoulement du liquide précédemment aspiré, en direction de la chambre 22 en traversant les lumières 20. Le joint torique 13, lors de ce mouvement ascendant du piston est plaqué contre la face inférieure de la gorge 12 (fig. 3) par suite de son frottement contre l'alésage de la partie inférieure 2 du cylindre 1. Du fait de la présence de la rainure 14, il y a communication entre cette dernière et l'espace 24 défini respectivement par l'alésage de la partie 2 du cylindre 1, la face périphérique de la partie 10 du piston 4, l'épaulement 25 déterminé par les parties 10 et 11 de ce piston et la membrane 5. Ainsi, lors de l'élévation du piston, la pression atmosphérique règne dans ledit espace 24.

Lorsque le piston est à son point mort haut, la face latérale de la cloison 15a de la coupelle 15 est en appui contre le haut de l'alésage tronconique de la partie supérieure 3 du cylindre 1, de telle sorte qu'au repos de la pompe dans cette position du piston, la membrane est complètement protégée par rapport au liquide situé dans le chambre de refoulement 22 ou le compartiment d'aspiration 21. En particulier, par décantation, les particules en suspension se concentrent dans la partie creuse de la cuvette 15 définie par sa cloison 15a.

Lors de l'inversion du mouvement linéaire du piston 4, c'est-à-dire lorsqu'il a franchi son point mort haut, la soupape 20 se ferme et celle 17 s'ouvre pour commencer la phase d'aspiration. La translation vers le bas du piston 4 entraîne un déplacement de sa gorge 12 par rapport au joint 13 qui reste fixe (fig. 4), de telle sorte qu'il vient coopérer avec le dessous de l'épaulement 25 (fig. 5). Lorsque le déplacement vers le bas suivant la flèche F2 continue, on comprend aisément qu'une dépression se produit dans l'espace 24, de telle sorte que la membrane est en quelque sorte aspirée dans cet espace sans possibilité de se froisser au-dessus du piston.

Ainsi, le déroulement de la membrane s'effectue correctement jusqu'au point mort bas du piston 4. Le joint 13 reste dans la position qu'il occupait (fig. 5). Dès que le point mort bas est franchi, on revient à la position de fig. 3, après que la gorge 12 ait effectuée une translation par rapport au joint 13 qui reste immobile (fig. 4) pour mettre à l'atmosphère l'espace 24 et ainsi permettre le déroulement de la membrane sans action risquant de nuire à sa longévité.

On notera enfin que la course du piston 4 à partir de son point mort bas jusqu'à son point mort haut est telle que sa partie inférieure 11 ne coopère qu'avec l'alésage cylindrique de la partie inférieure 2 du cylindre 1.

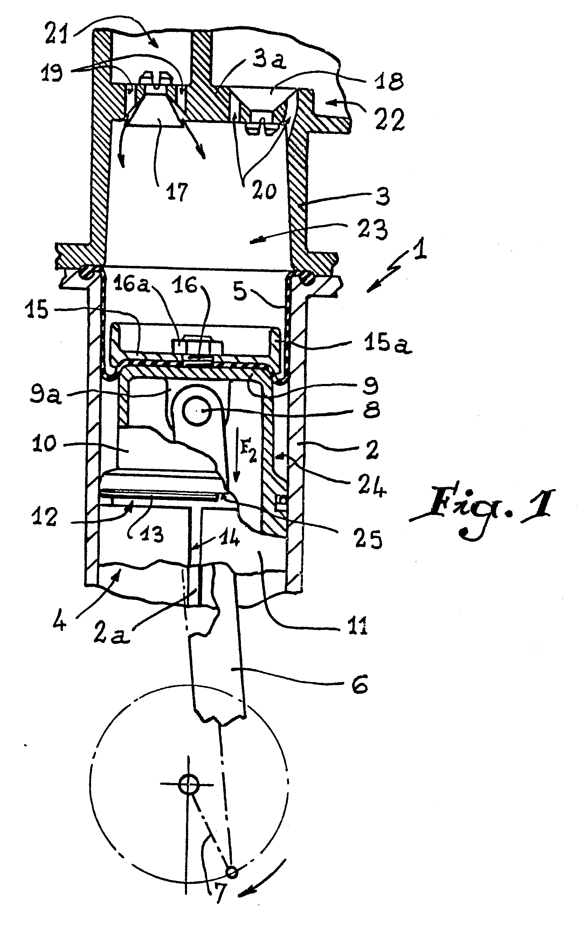

Si la pompe reste en position de repos avec son piston au point mort bas (fig. 1), les particules en suspension dans le compartiment d'aspiration et/ou la chambre de refoulement ainsi que dans le volume 23 sont pour la majeure partie recueillies dans la coupelle 15, de telle sorte qu'elles ne risquent pas d'endommager la membrane 5.

**Revendications**

1. Pompe à piston du type aspirante et refoulante, à membrane à déroulement (5) du genre dont le fond de la membrane est asujetti au dessus du piston (4), tandis que le bas de sa paroi latérale est rendu solidaire du cylindre (1), caractérisée en ce que le piston (4) comporte des moyens (10, 11, 12, 13, 14) de créer une dépression à l'arrière de la membrane (5) pendant la phase d'apsiration et d'annuler cette dépression pendant la phase de refoulement.

2. Pompe à piston suivant la revendication 1, caractérisée en ce que la jupe de son piston (4) comprend en partant du dessus (9) de ce dernier, une première partie (10) de diamètre nettement plus faible que celui de l'alésage de son cylindre (1) et une seconde partie (11) de diamètre égal au jeu de fonctionnement près à celui dudit alésage, une gorge périphérique (12) étant ménagée dans la seconde partie (11) près de sa jonction (25) avec la première (10), tandis qu'au moins une rainure longitudinale (14) part de cette gorge pour aboutir à la base de ladite seconde partie, la largeur de ladite gorge (12) étant supérieure au diamètre d'un joint torique usuel (13) engagé dans ladite gorge.

3. Pompe à piston suivant la revendication 1, caractérisée en ce que le fond de la membrane est plaqué contre le dessus (9) du piston (4) au moyen d'une pièce en forme de coupelle (15) tournée vers le haut du cylindre.

4. Pompe à piston suivant la revendication 3, caractérisée en ce que l'alésage du cylindre (1) présente sur au moins une partie (3) de sa hauteur une forme conique ouverte vers le bas.

5. Pompe à piston suivant la revendication 4, caractérisée en ce que la cuvette (15) comporte une paroi périphérique tronconique (15a) avec une conicité correspondante à celle de l'alésage du cylindre, de telle sorte qu'au point mort haut, cette paroi (15a) soit en contact avec l'alésage du cylindre.

6. Pompe à piston suivant la revendication 4, caractérisée en ce que son cylindre (1) est réalisé en deux parties, l'une inférieure (2) à alésage cylindrique et l'autre supérieure (3) à alésage tronconique, ces deux parties pinçant entre elles le bas de la paroi latérale de la membrane (5).

7. Pompe à piston suivant la revendication 6, caractérisée en ce que la partie inférieure (11) du piston (4) reste toujours dans l'alésage de la partie inférieure (2) du cylindre (1).

8. Pompe à piston suivant l'une quelconque des revendications précédentes, caractérisée en ce que l'alésage de la partie inférieure (2) de son cylindre (1) comporte au moins une nervure (2a) qui s'engage dans la rainure (14) du piston (4) lorsque celui-ci approche du point mort bas.

0251948

Fig. 1

0251948

*Fig. 2*

**Fig. 3**

**Fig. 4**

**Fig. 5**